Europäisches Patentamt

European Patent Office

Office européen des brevets

(11) Veröffentlichungsnummer: **0 212 355**
**B1**

(12) **EUROPÄISCHE PATENTSCHRIFT**

(45) Veröffentlichungstag der Patentschrift: **10.10.90**

(51) Int. Cl.⁵: **B 32 B 27/40, C 08 J 7/04, C 08 J 5/18**

(21) Anmeldenummer: **86110419.8**

(22) Anmeldetag: **29.07.86**

(54) Schichtstoffe.

(30) Priorität: **10.08.85 DE 3528812**

(43) Veröffentlichungstag der Anmeldung:
**04.03.87 Patentblatt 87/10**

(45) Bekanntmachung des Hinweises auf die Patenterteilung:
**10.10.90 Patentblatt 90/41**

(84) Benannte Vertragsstaaten:
**DE FR GB IT**

(56) Entgegenhaltungen:
**DE-A-2 517 032**
**DE-A-2 755 088**
**DE-A-3 010 143**
**DE-A-3 021 022**
**DE-A-3 445 190**

**CHEMICAL ABSTRACTS, Band 85, Nr. 18, 01 November 1976, Columbus, OH (US); S. 71, Nr. 125353d**

(73) Patentinhaber: **BAYER AG**
**D-5090 Leverkusen 1 Bayerwerk (DE)**

(72) Erfinder: **Wank, Joachim, Dipl.-Ing.**
**Zülpicher Str. 7**
**D-4047 Dormagen 5 (DE)**
Erfinder: **Waldenrath, Werner, Dipl.-Ing.**
**Maastricher Str. 40**
**D-5000 Köln (DE)**
Erfinder: **Schmitz, Heinz**
**Zweite Gewanne 4**
**D-4047 Dormagen (DE)**
Erfinder: **Pakulat, Günter**
**Hülsensteeg 14**
**D-5067 Kürten (DE)**

**Beschreibung**

Gegenstand der vorliegenden Erfindung sind Schichtstoffe einer Dicke von 0,5 mm bis 20 mm bestehend aus

1. einer 0,02 mm bis 0,8 mm dicken Folie aus thermoplastischem Kunststoff,

2. einer bei Raumtemperatur klebfreien Polyurethanschicht,

3. einer Farbschicht, gegebenenfalls,

4. einer zweiten bei Raumtemperatur klebfreien Polyurethanschicht und

5. einer thermoplastischen Kunststoffschicht einer Dicke von 0,4 mm bis 19 mm.

Erfindungsgemäß geeignete Folien aus thermoplastischen Kunststoffen sind solche aus bekannten thermoplastischen aromatischen Polycarbonaten mit Gewichtsmittelmolekulargewichten $\bar{M}$w von 25.000 bis 200.000, vorzugsweise von 30.000 bis 120.000 und insbesondere von 30.000 bis 80.000 ($\bar{M}$w ermittelt über $\eta_{rel}$ in $CH_2Cl_2$ bei 20°C under einer Konzentration von 0,5 g pro 100 ml); erfindungsgemäß geeignete Folien aus thermoplastischen Kunststoffen sind außerdem vorzugsweise solche aus bekannten, thermoplastischen Polyarylsulfonen, welche linear (siehe DE—OS 27 35 144) oder verzweigt (siehe DE—OS 27 35 092 beziehungsweise DE—OS 23 05 413) sein können.

Geeignete lineare Polyarylsulfone sind alle bekannten aromatischen Polysulfone oder Polyethersulfone mit $\bar{M}$w (Gewichtsmittelmolekulargewicht gemessen beispielsweise mittels Lichtstreuung) zwischen etwa 15.000 und etwa 55.000, vorzugsweise zwischen etwa 20.000 und etwa 40.000. Derartige Polyarylsulfone sind beispielsweise in DE—OS 17 19 244 bzw. US—PS 33 65 517 beschrieben.

Geeignete verzweigte Polyarylsulfone sind insbesondere die verzweigten Polyarylethersulfone gemäß DE—OS 23 05 413 bzw. US—PS 39 60 815, deren $\bar{M}$w (Gewichtsmittelmolekulargewicht, gemessen beispielsweise mittels Lichtstreuung) zwischen etwa 15.000 und etwa 50.000, vorzugsweise zwischen etwa 20.000 und 40.000 liegen. (Weitere Einzelheiten dazu siehe DE—AS 30 10 143).

Für die Folien gemäß Komponente 1 geeignete thermoplastische Kunststoffe sind vorzugsweise auch thermoplastische Celluloseester, thermoplastische Polyvinylchloride, thermoplastische Styrol-Acylnitril-Copolymerisate und thermoplastisches Polymethylmethacrylat.

Erfindungsgemäß geeignete Celluloseester werden nach üblichen Verfahren durch Veresterung der Cellulose mit aliphatischen Monocarbonsäureanhydriden, vorzugsweise Essigsäure- und Buttersäure- oder Essigsäure- und Propionsäureanhydrid, gewonnen. Die in der Rohlösung durchzuführende Hydrolyse wird durch einen geringen Wasserüberschuß so gesteuert, daß ein geringer Hydroxylgehalt (4 bis 25) erhalten wird. Die oxydative Bleiche des aus der Lösung isolierten Celluloseesters muß so durchgeführt werden, daß im Endprodukt kein Oxydationsmittel mehr nachweisbar ist; gegebenenfalls muß eine Nachbehandlung mit Reduktionsmitteln erfolgen. Zur Bestimmung der OH-Zahl werden die freien Hydroxylgruppen des Celluloseesters mit Acetanhydrid in Pyridin verestert, der Überschuß Anhydrid mit Wasser umgesetzt und zurücktitriert [Vorschrift: C. J. Mahn, L. B. Genung und R. F. Williams, Analysis of Cellulose Derivatives, Industrial and Engineering Chemistry, Vol. 14, Nr. 12, 935—940 (1942)].

Die Viskosität der Celluloseester soll 0,3 bis 0,5 Poise, gemessen als 20 gew.-%ige Lösung in Aceton, betragen, Vorzugsweise zu verwendende Celluloseester weisen im Falle der Acetobutyrate einen Essigsäuregehalt von 17 bis 23 Gew.-% und einen Buttersäuregehalt von 45 bis 50 Gew.-%, im Falle der Acetopropionate einen Propionsäuregehalt von 61 bis 69 Gew.-% und einen Essigsäuregehalt von 2 bis 7 Gew.-% auf. Die OH-Zahlen liegen üblicherweise zwischen 4 und 25. Die mittleren Gewichtsmittel der Molekulargewichte $\bar{M}$w liegen zwischen 10.000 und 1.000.000, vorzugsweise zwischen 100.000 und 500.000.

Erfindungsgemäß geeignete thermoplastische Polyvinylchloride sind beispielsweise die im Handel befindlichen PVC-Typen.

Erfindungsgemäß geeignete thermoplastische Styrol-Acrylnitril-Copolymerisate sind Mischpolymerisate des Styrols mit vorzugsweise Acrylnitril die z.B. durch Suspensions-polymerisation in Gegenwart von Katalysatoren aus den Monomeren bzw. der Mischung der Monomeren mit $\bar{M}$w von 10.000 bis 600.000 erhalten werden ($\bar{M}$w wird gemessen in DMF bei C=5 g/l und 20°C). Literatur dazu siehe Beilsteins Handbuch der organischen Chemie, vierte Auflage, Duttes Ergängzungswerk B 1.5, Seiten 1163—1169, Springer Verlag 1964, H. Ohlinger, Polystyrol 1. Teil, Herstellungsverfahren und Eigenschaften der Produkte, Springer Verlag (1955).

Zur bekannten Herstellung der Folien gemäß Komponente 1 kann auf DE—OS 25 17 033, oder auf DE—OS 25 31 240 verwiesen werden.

Die Folien gemäß Komponente 1 sind einseitig mattiert oder einseitig strukturiert, was in bekannter Weise erfolgt, in dem die Schmelze des thermoplastischen Kunststoffs durch eine Breitschlitzdüse ausgepreßt wird und die Schmelzfahne über eine mattierte bzw. strukturierte Abkühlwalze abgezogen wird.

Die Folien können auch einseitig poliert und einseitig mattiert sein.

Die Dicke der Folien ist, vorzugsweise zwischen und 0,05 und 0,8 mm.

Zur Herstellung der erfindungsgemäß geeigneten Polyurethanschichten gemäß Komponenten 2 und 4 können sowohl wäßrige, zu transparenten Filmen auftrocknende Dispersionen von vorzugsweise linearen Polyesterpolyurethanen als auch zu transparenten Filmen auftrocknende organische Lösungen von vorzugsweise linearen Polyesterpolyurethanen, die gegebenenfalls ein höherfunktionelles Polyisocyanat als Vernetzer enthalten, verwendet werden. Geeignete Polyurethandispersionen sind beispielsweise solche, auf Basis von linearen Polyesterdiolen, aromatischen oder aliphatischen Diisocyanaten und gegebenenfalls den üblichen Kettenverlängerungsmitteln, die unter Mitverwendung von ionischen Aufbaukomponenten entsprechend der Lehre der US—PS 34 79 310 oder der DE—AS 14 95 847 hergestellt worden sind. Sehr gut geeignet sind auch die wäßrigen Dispersionen von Carboxylat- und Sulfonatgruppen aufweisenden, vorzugsweise linearen Polyesterpolyurethanen, wie sie gemäß DE—OS 28 04 609 erhalten werden können. Im Falle der Verwendung von organischen Lösungen von vorzugsweise linearen Polyesterpolyurethanen kommen vorzugsweise Lösungen von nicht-ionischen linearen Polyesterpolyurethanen in geeigneten Lösungsmitteln in Betracht. Bei diesen Polyurethanen handelt es sich vorzugsweise um Umsetzungsprodukte von (i) aromatischen Diisocyanaten wie 2,4- und/oder 2,6-Diisocyanatotoluol, 4,4'-Diisocyanatodiphenylmethan, Hexamethylendiisocyanat, Isophorondiisocyanat oder 1,5-Diisocyanatonaphthalin oder deren Gemischen mit (ii) Polyesterdiolen des Molekulargewichtsbereichs ($\overline{M}$w) 1.000 bis 4.000, insbesondere auf Basis von Adipinsäure und geeigneten Glykolen wie Ethylenglykol, 1,4-Dihydroxybutan, 1,6-Dihydroxyhexan und deren Gemischen und gegebenenfalls (iii) Kettenverlängerungsmitteln, beispielsweise den zuletztgenannten Glykolen, wobei die Reaktionspartner unter Einhaltung eines NCO/OH-Äquivalentverhältnisses von 0,9:1 bis 1:1,1, vorzugsweise 0,95:1 bis 1:1 zum Einsatz gelangen, und wobei pro Mol Polyesterdiol gegebenenfalls 0,1 bis 2 Mol Kettenverlängerer bzw. Kettenverlängerergemisch zum Einsatz gelangen. Geeignete Lösungsmittel für derartige Polyesterpolyurethane sind beispielsweise Ethylacetat, Butylacetat, Methylethylketon, Methylisobutylketon oder aus derartigen Lösungsmitteln bestehende Gemische. Die Dispersionen oder Lösungen werden im allgemeinen mit einem Feststoffgehalt von 10—40 Gew.-% verwendet. Oft kann es zweckmäßig sein, den genannten Lösungen untergeordnete Mengen eines höherfunktionellen Polyisocyanats, beispielsweise an Tris-(6-isocyanatohexyl)-biuret einzuverleiben, um die mechanischen Eigenschaften des letztendlich erhaltenen Polyurethanfilms zu verbessern.

Die Zwischenschicht gemäß Komponente 2 kann entweder kontinuierlich im Rollcoater- oder Rakelverfahren auf die Folie aufgebracht werden, oder aber im Siebdruckverfahren vor dem Drukken des Dekors. Die Menge der Dispersion bzw. Lösung wird im allgemeinen so bemessen, daß Trockenfilmstärken von 2—80 μm, vorzugsweise 15—30 μm resultieren.

Die Zwischenschicht gemäß Komponente 4 wird auf die Farbdekorschicht 3 im Siebdruckverfahren aufgedruckt.

Die Zwischenschichten gemäß Komponenten 2 und 4 stellen bei Raumtemperatur völlig klebfreie thermoplastische Schichtenden.

Unter Siebdruckverfahren gemäß vorliegende Erfindung versteht man das Druchdrücken von Farben bzw. Lacken durch ein um einen Rahmen gespanntes Siebgewebe, dessen Maschen partiell ne jach Druckvorlage, geschlossen sind. Die verbleibenden Öffnungen in Siebgewebe entsprechen dem Druckbild.

Die Dicke der Polyurethanschicht 4 beträgt 2 bis 80 μm, vorzugsweise 15 bis 30 μm.

Geeignete Farbschichten gemäß Komponente 3 bestehen aus Lacken auf Basis Polyacrylaten oder Mischungen aus Polyacrylat und Celluloseacetobutyrat und/oder PVC-Mischpolymerisat, die Pigmente und/oder Farbstoffe enthalten.

Die Fabrschichten 3 werden im Siebdruckverfahren auf die Polyurethanschicht 2 gebracht.

Die Dicke der Farbschichten liegt zwischen 5 und 50 μm.

Die thermoplastische Kunststoffschicht gemäß Komponente 5 sind vorzugsweise aus thermoplastischem Polymethylmethacrylat, thermoplastischen Acrylnitril-Butadien-Styrol-Copolymerisaten, thermoplastischen Polystyrol, thermoplastischem Polycarbonat, thermoplastischen Styrol-Acrylnitril-Copolymerisaten und thermoplastischen Celluloseestern, wobei die drei letztgenannten thermoplastischen Kunststoffe bereits unter Komponente 1 definiert sind.

Thermoplastische Polymethylmethacrylate sind beispielsweise die im Handel befindlichen Plexiglas-Typen.

Thermoplastische Acrylnitril-Butadien-Styrol-Copolymerisaten sind insbesondere Mischungen aus

a) 50 bis 70 Gew.-% eines oder mehrerer Pfropfprodukte und

b) 95 bis 30 Gew.-% eines oder mehrerer thermoplastischer Harze.

Pfropfprodukte (a) sind bevorzugt Polymerisate, die durch Polymerisation von Pfropfmonomeren in Anwesenheit eines Kautschuks als Pfropfbasis erhalten werden. Der Kautschukanteil ist bevorzugt 5 bis 80 Gew.-%, erhängt auch vom Polymerisationsverfahren ab.

Als Pfropfbasis kommt insbesondere Polybutadien, Naturkautschuk, Butadien/Acrylnitril-Copolymerisate und Butadien/Styrol-Co- und Blockpolymerisate in Betracht, Verwendbar sind auch Acrylester-Vinylether-Polymerisate sowie EPDM-Terpolymerisate Pfropfmonomere sind hauptsächlich Styrol Gemische aus Styrol und Acrylnitril bevorzugt im Gewichtsverhältnis 90:10 bis 50:50. Gemische aus Styrol und Methyl(meth)acrylat, bevorzugt im Gewichtsverhältnis 5:95 bis 95:5 sowie Styrol/Acrylnitril/Methyl(meth)acrylat-Gemische.

Die Herstellung solcher Pfropfprodukte ist an sich bekannt. Man kann die Pfropfmonomeren in Gegenwart eines Kautschuklatex in Emulsion polymerisieren. Die Pfropfreaktion wird dann mit einem radikalischen Initiator gestartet. Ist der Kautschuk anvernetzt und werden bei der Pfropfreaktion bestimmte Mengenverhältnisse von Pfropfmonomeren und Pfropfgrundlagen eingehalten, so ist die Größe der Kautschukteilchen im Latex bestimmend für die Teilchengröße des resultierenden Pfropfpolymerisats. Die Pfropfhülle aus chemisch an die Kautschukteilchen gebundenen Ketten des Polymerisats der Pfropfmonomeren ist im Verhältnis dünn und ändert die Größe des Kautschukteilchens nicht wesentlich. Als Größe wird hier der $d_{50}$-Wert verstanden, d.h. der Durchmesser oberhalb dessen und unterhalb dessen jeweils 50% der Durchmesser der Teilchen liegen. Die Pfropfreaktion ist unvollständig, so daß ihr Produkt als Pfropfprodukt bezeichnet wird. Neben dem eigentlichen Pfropfpolymerisat enthält es auch nichtgepfropfte Copolymere der Pfropfmonomeren.

Man kann die Pfropfpolymerisate auch durch Masse/Lösung- oder Masse/Suspensionspolymerisation, vorzugsweise aus Monomer-löslichem Kautschuk herstellen. Die Größe der Pfropfkautschukteilchen wird dann in der Phaseninversionsstufe festgelegt und kann mechanisch (durch Rühren) und durch chemische Beeinflussung des Phasengleichgewichts (Zusatz von Dispergatoren) beeinflußt werden. Im allgemeinen werden bei Masse/Lösungs-Pfropfprozessen Teilchen von 1 µm Durchmeser oder größer erhalten. Der Kautschukgehalt des Pfropfproduktes ist auf maximal 25 Gew.-% beschränkt.

Man kann erfindungsgemäß Produkte verwenden, deren Teilchen eine Größe von 0,05 bis 20 µm haben und soche, in denen ein erheblicher Teil der Pfropfmonomeren im Innern der Kautschukteilchen als Homo- oder Copolymerisat inkludiert ist. Bevorzugte Teilchengrößen sind 0,05 bis 1,2 µm, insbesondere 0,05 bis 0,6 µm. Es ist auch möglich, mehrere verschiedene Pfropfprodukte nebeneinander einzusetzen z.B. zwei Pfropfprodukte, die sich durch den Pfropfgrad (oder durch die Pfropfdichte), die Teilchengröße oder durch beides gleichzeitig unterscheiden. Besonders geeignet ist beispielsweise ein Gemisch aus einem Pfropfprodukt mit Teilchen einer Größe $d_{50}$ von 0,35 bis 10 µm und einem Pfropfprodukt mit Teilchen einer Größe $d_{50}$ von 0,05 bis 0,32 µm (so hergestellte ABS-Polymerisate werden auch als Bimodalsysteme bezeichnet).

Bevorzugt enthalten die Pfropfprodukte 35 bis 80 Gew.-%, insbesondere 40 bis 70 Gew.-%, Kautschuk und besitzen Teilchengrößen $d_{50}$ von 0,1 bis 0,5 µm. Sie werden in einer solchen Menge eingesetzt, daß das fertige ABS-Polymerisat 5 bis 25 Gew.-%, bevorzugt 5 bis 20 Gew.-% Kautschuk enthält.

Das den zweiten Bestandteil des ABS-Polymerisats bildende thermoplastische Harz (b) stellt die durchgehende Matrix dar und ist ein Polymerisat oder Copolymerisat von Styrol, α-Methylstyrol/Acrylnitril/Methyl(meth)acrylat oder Maleinsäureanhydrid. Bevorzugt sind Polystyrol, Styrol-Acrylnitril-Copolymerisate mit einem Acrylnitrilgehalt von 20 bis 35 Gew.-% sowie α-Methylstyrol-Acrylnitril-Copolymerisate mit einem Acrylnitrilgehalt von 20 bis 31 Gew.-%. Das Gewichtsmittel des Molekulargewichtes dieser Harze ist 50.000 bis 550.000; die molekulare Uneinheitlichkeit U.

$$\left(\frac{M}{M} - 1 = U\right) \text{ ist } 1,0 - 3,5$$

Verwendet man ein einzelnes Pfropfprodukt, so ist es vorteilhaft, wenn die quantitative Zusammensetzung der Pfropfmonomeren und die des Harzes ähnlich oder gleich sind. Verwendet man ein Gemisch von zwei Pfropfprodukten verschiedener Teilchengrößen, dann ist es vorteilhaft, wenn die quantitative Zusammensetzung der Pfropfmonomeren des Pfropfproduktes mit den gröberen Teilchen von der Zusammensetzung des Harzes verschieden ist. α-Methylstyrol in Kombination mit Acrylnitril kann nicht gepropft werden, sondern ist nur im Harz zu verwenden.

Die thermoplastischen Harze, z.B. Sytrol/Acrylnitril oder α-Methylstyrol/Acrylnitril-Copolymerisate können nach bekannten Verfahren hergestellt werden, z.B. durch Massepolymerisation, Lösungspolymerisation, Suspensionspolymerisation und Emulsionspolymerisation.

Pfropfprodukt und thermoplastisches Harz werden häufig getrennt hergestellt, beide meist durch Emulsionspolymerisation. Fallen die Komponenten in Latexform an, so können die Latices gemischt und gemeinsam ausgefällt werden.

Zur Herstellung der Kunststoffschicht 5 geeignete thermoplastische Polystyrole sind Homopolymerisate des Styrols oder Mischpolymerisate des Styrols mit vorzugsweise Acrylnitril und/oder Butadien, und/oder Maleinsäureester, die z.B. durch Suspensionspolymerisation in Gegenwart von Katalysatoren aus den Monomeren bzw. der Mischung der Monomeren mit $\bar{M}$w von 10.000 bis 600.000 erhalten werden ($\bar{M}$w wird gemessen DMF bei c=5 g/l und 20°C). (Literatur dazu siehe: Beilsteins Handbuch der Organischen Chemie, vierte Auflage, Drittes Ergänzungswerk, Bd. 5, Seiten 1163—1169, Springer Verlag 1964, H. Ohlinger, Polystyrol, 1, Teil, Herstellungsverfahren und Eigenschaften der Produkte, Springer Verlag 1955).

Die Einbringung der Kunststoffschicht 5 und damit die Herstellung des erfindungsgemäßen Schichtstoffs erfolgt durch Hinterspritzen der Schichten 1+2+3 beziehungsweise 1+2+3+4 nach bekannten Verfahren (siehe dazu beispielsweise DE—OS 27 55 088).

Die Dicke der Kunststoffschicht 5 liegt vorzugsweise zwischen 0,4 und 19 mm.

Gegenstand der vorliegenden Erfindung ist außerdem ein Verfahren zur Herstellung der erfindungsgemäßen Schichtstoffe aus den Schichten 1+2+3+5 und gegebenenfalls 4, das dadurch gekennzeichnet ist, daß man Folien aus thermoplastischen Kunststoffen mit Polyurethanen beschichtet, danach mit einer Farbschicht und gegebenenfalls mit einer zweiten Polyurethanschicht im Siebdruckverfahren beschichtet und schließlich mit einer thermoplastischen Kunststoffschicht in bekannter Weise hinterspritzt.

Verbundfolien mit Polyurethanverklebung sind bekannt. (siehe beispielsweise DE—OS 25 17 032 und DE—AS 30 10 143).

Das Hinterspritzen von thermoplastischen Kunststoffolien mit thermoplastischen Kunststoffen ist ebenfalls bekannt (siehe DE—OS 27 55 088).

Eine Farbzwischenschicht ist in dieser Literatur jedoch nicht erwähnt.

Aus der DE—OS 15 94 164 sind Schichtstoffe aus Polycarbonaten und Glas bekannt, die Polyurethanzwischenschichten aus vorzugsweise thermoplastischen Polyurethanen enthalten. Diese Schichtstoffe können beispielsweise als Windschutzscheiben für Kraftfahrzeuge verwendet werden. Einfärbungen dieser Schichtstoffe sind in der DE—OS 15 94 164 nicht angesprochen.

Aufgabe der vorliegenden Erfindung war es nun Druckbilderenthaltende Schichtstoffe auf einfache Weise bereitzustellen. Die Vorteile dieser Schichtstoffe sind

1. Aus der Spritzgußmaschine werden einbaufertige, d.h. mit endgültigem versehene Teile entnommen.

2. Der Dekodruck ist wisch- und abriebgeschützt, da er zwischen Frontfolie und Trägerschicht liegt.

3. Die Schichtstoffe sind besonders einfach herstellbar.

4. Durch geeignete Auswahl der Komponenten können die Eigenschaftswerte in weitem Bereich variiert werden.

Die Verwendung der erfindungsgemäßen Schichtstoffe erfolgt beispielsweise für Blenden für Hautshalts- Phono- und TV-Geräte.

Beispiel 1

Eine 200 µm dicke, einseitig strukturierte, einseitig matte Folie aus thermoplastischen Diphenol-A-Homopolycarbonat ($\eta_{rel}$=1,31, gemessen in $CH_2Cl_2$ bei 25°C und einer Konzentration von 0,5 g/100 ml) wird auf der matten Seite mit einer wäßrigen handelsüblichen Dispersion eines linearen Polyesterpolyurethans auf Basis von Polyethylenadipinat mit einem Molekulargewicht $\bar{M}w$ von 2.000 und von Toluylendiisocyanat im Siebdruckverfahren bedruckt, wobei ein Sieb mit 43 Fäden/cm verwendet wird. Die somit erhaltene Dicke der Polyurethanschicht beträgt 20 µm. Nach Trocknen der Schicht (2 min bei 80°C) erfolgt der Aufdruck des Farbdekors auf die Polyurethanzwischenschicht in an sich bekannter Weise im Siebdruckverfahren. Als Farbe wird eine handelsübliche Farbe auf PVC-Basis verwendet. Die so bedruckte Folie wird entsprechend der Form des Fertigteils ausgestanzt und so in die geöffnete Spritzgießform für den Trägerwerkstoff eingelegt, daß die strukturierte Seite der Polycarbonatfolie dem Anspritzpunkt des thermoplastischen Kunststoffes gegenüberliegt.

Eine gegebenenfalls erforderliche Fixierung der Folie im Werkzeug kann mittels elektrostatidscher Aufladung der Folie oder durch Vakuum erfolgen. Nach Schließen des Werkzeuges erfolgt der Spritzvorgang in an sich bekannter Weise, mit einem thermoplastischen Kunststoff aus Acrylnitril-Butadien-Styrol-Mischpolymerisat mit einer $\eta_{rel}$ von 1,4, das durch Copolymerisation von 50 Gew.-% Acrylnitril, 20 Gew.-% Butadien und 30 Gew.-% Styrol gemäß DAS 2 827 594 erhalten wurde.

Die Gesamtdicke des Schichtstoffes beträgt 6 mm.

Beispiel 2

Beispiel 1 wird wiederholt, wobei als wäßrige Dispersion eines Polyurethans ein solches auf Basis von Polybutylenadipinat mit einem Molekulargewicht $\bar{M}w$ von 4000 und von einer Mischung aus Hexamethylendiisocyanat und Isophorondiisocyanat eingesetzt wird. Als Farbe für die Aufbringung des Farb-Dekors wurde eine Harzmischung aus Polyacrylat und Celluloseacetobutyrat verwendet, die Gesamtdicke des Schichtstoffes beträgt 3 mm.

Beispiel 3

Beispiel 1 wird wiederholt, wobei als Polycarbonatfolie eine einseitig hochglänzend polierte, einseitig matte Polycarbonatfolie aus dem Bisphenol-A-Homopolycarbonat des Beispiels 1 mit einer Dicke von 200 µm eingesetzt wird.

Nach dem Aufdrucken der Farb-Dekorschicht wird eine zweite Polyurethanschicht aus der Polyurethandispersion im Siebdruckverfahren aufgebracht.

Das Hinterspritzen der Viererschicht erfolgt mit thermopolastischem Polystyrol, das ein $\bar{M}w$ von 40.000 hat.

Die Gesamtdicke des Schichtstoffes beträgt 8 mm.

**Patentansprüche**

1. Schichtstoffe einer Dicke von 0,5 mm bis 20 mm bestehend aus

(1) einer 0,02 mm bis 0,8 mm dicken Folie aus thermoplastischem Kunststoff,

(2) einer bei Raumtemperatur klebfreien Polyurethanschicht,

(3) einer Farbschicht, gegebenenfalls,

(4) einer zweiten bei Raumtemperatur klebfreien Polyurethanschicht und

(5) einer thermoplastischen Kunststoffschicht einer Dicke von 0,4 mm bis 19 mm.

2. Schichtstoffe gemäß Anspruch 1, bestehend aus den Schichten 1+2+3+5.

3. Verfahren zur Herstellung der Schichtstoffe der Ansprüche 1 und 2, dadurch gekennzeichnet, daß man Folien aus thermoplastischen Kunststoffen mit Polyurethanen beschichtet, danach mit einer Farbschicht und gegebenenfalls mit einer zweiten Polyurethanschichtim Siebdruckverfahren beschichtet und schließlicht mit einer thermoplastischen Kunststoffschicht in bekannter Weise hinterspritzt.

**Revendications**

1. Màtières stratifiées, à une épaisseur de 0,5 à 20 mm, consistant en:

(1) une feuille d'une résine synthétique thermoplastique épaisse de 0,02 à 0,8 mm,

(2) une couche de polyuréthanne non collante à température ambiante,

(3) une couche colorée, le cas échéant,

(4) une deuxième couche de polyuréthanne non collante à température ambiante, et

(5) une couche d'une résine synthétique thermoplastique à une épaisseur de 0,4 à 19 mm.

2. Matières stratifiées selon la revendication 1, consistant en les couches 1+2+3+5.

3. Procédé de préparation des matières stratifiées des revendications 1 et 2, caractérisé en ce que, sur des feuilles de résine synthétique thermoplastique, on applique en revêtement un polyuréthanne puis on applique par sérigraphie une couche colorée et le cas échéant une deuxième couche de polyuréthanne, et finalement on injecte à l'arrière, de manière connue, une couche de résine synthétique thermoplastique.

**Claims**

1. Laminated materials having a thickness of from 0.5 mm to 20 mm, consisting of

(1) a sheet of thermoplastic synthetic resin from 0.02 mm to 0.8 mm in thickness,

(2) a polyurethane layer which is non-tacky at room temperature,

(3) a coloured layer, optionally

(4) a second polyurethane layer which is non-tacky at room temperature, and

(5) a layer of thermoplastic synthetic resin having a thickness of from 0.4 mm to 19 mm.

2. Laminated materials according to Claim 1, consisting of layers 1+2+3+5.

3. Process for the production of the laminated materials of Claims 1 and 2, characterised in that sheets of thermoplastic synthetic resins are coated with polyurethanes and thereafter with a coloured layer and optionally with a second polyurethane layer by the screen printing process and finally back sprayed with a thermoplastic synthetic resin layer in known manner.